# EUROPEAN PATENT APPLICATION

(11) **EP 1 255 216 A1**
(43) Date of publication of application: **06.11.2002**
(21) Application number: 02252874.9
(22) Date of filing: 24.04.2002
(51) Int. Cl.: G06F 17/60

(54) **A system and method for managing a product strategy**

(30) Priority: 03.05.2001 US 681597
(71) Applicant: Ford Global Technologies, Inc., Dearborn, Michigan 48126 (US)
(72) Inventor: Jansson, Stefan, 411 20 G-teborg (SE); Mendis, Kolita, Palo Alto, California 94306 (US); Loczi, Geza, Moorpark, California 93021 (US); Ippoliti, Michael, Long Beach, California 90803 (US); Johnson, Tisha, Glendale, California 91201 (US); Sommerfeld, Benny, Thousand Oaks, California 91362 (US); Taylor, Blair, Thousand Oaks, California 91362 (US)
(74) Representative: Messulam, Alec Moses

(57) **Abstract**

A method and arrangement for managing a product strategy over a period of time spanning one or more generations is disclosed. The method considers people's lifestyle, life stage, generational belonging, and product characteristics in order to predict necessary changes of product requirements for one or more target groups. The arrangement includes a data processing system having a computer processing means for processing data and a storage means for storing data on a storage medium. Input data includes demographic data, as well as current and predicted product requirement data for selected lifestyles and life stages. By processing and correlating the data, a product specification is obtained that determines a product strategy for the product or products in question. The invention also relates to a method for managing a product strategy using said processing system.

## Description

The invention relates to a method or strategy for managing a product strategy over a period of time spanning over one or more generations of customers, taking into account lifestyle, life stage, their generational belonging and product characteristics in order to predict necessary changes of product requirements for one or more target groups.

When developing a product, a manufacturer must take into account a multitude of factors, such as consumer demand for the product, possible developments in the technology used, competing company products, and other relevant conditions.

As a rule, most products have a certain life cycle and from the time that the product is launched, sales tend to increase until a top volume is reached. Thereafter, the production volume decreases until the product is taken out of production. In order to extend the useful life of a product, the manufacturer can present new or limited versions (colour schemes, added features, etc.) of the product and by so doing perform so-called product facelifts and try to introduce the product to new target groups. These mainly superficial measures can be applied to a current product, but are not very useful for long term planning of future models of a product. These mainly superficial measures can be applied to a current product, but are not very useful for long-term planning of future models of a product.

For a reasonably complex product, such as an automobile, planning may start 2-5 years before launch. The problem is to manufacture a product that will be perceived as new and modern at the time of launch.

A product in the form of an automobile may then have an average life cycle of 7 years, reaching its top sales volume after 2 years.

Because of the long delay between the planning stage and start of production of a product, there is a risk that the target group at which it was aimed will have changed. This can occur, for instance, if a new technology or a new design trend has emerged, making the product seem outdated. In this case none of the above solutions will help.

What is required is a means for planning a product strategy that takes into consideration multiple factors influencing the early planning and development product stages, as well as initial demand and future sales of the product. The strategy needs to also address at an early stage and reaching new target groups during product maturity.

It is an object of the invention to provide a method and system for planning and managing a life cycle of a product.

According to a first aspect of the invention there is provided a data processing system for managing a product development strategy for a time period extending over one or more generations of consumers, characterised in that the system comprises of a computer processing means for processing data, a storage means for storing data on a storage medium, a first means for processing data relating to life stages of consumers and the statistical division of said life stages into distinct groups within each generation of consumers, a second means for processing data relating to lifestyles within groups of life stages for different generations and division of said lifestyles into distinct groups within each generation of consumers, a third means for processing data relating to generations within groups of life stages and groups of different lifestyles into distinct groups within each generation of consumers, a fourth means for processing data relating to current and future product characteristics required by consumers, determining product requirements made by consumers in different lifestyles within each life stage and each generation of consumers, a fifth means for processing and correlating data from the first, second third and fourth means in order to determine required product characteristics for future products or for changes in product characteristics in current products for each lifestyle and life stage respectively and means for creating locations on the storage medium for storing and retrieving data relating to required product characteristics for current or future products.

The first means may further comprise of a means for inputting and storing on the storage medium statistical data for each life stage within each generation and means for inputting and storing on the storage medium data identifying groups of life stages within each generation.

The second means may further comprise of a means for inputting and storing on the storage medium statistical data relating to values and preferences for each lifestyle within each generation and means for inputting and storing on the storage medium data identifying groups of lifestyles within each generation.

The third means may further comprise of a means for inputting and storing on the storage medium statistical data relating to values and preferences for each generation within each life stage and lifestyle and means for inputting and storing on the storage medium data identifying generations within each life stage and lifestyle.

The fourth means may further comprise of a means for inputting and storing on the storage medium statistical data relating to product characteristics for a single product or a group of products to be evaluated, means for inputting and storing on the storage medium data identifying product related requirements for each life stage within each generation and means for inputting and storing on the storage medium data identifying product related requirements for each lifestyle within each generation.

The fifth means may further comprise of a means for comparing product-related requirements for each lifestyle with product related requirements for consecutive life stages within each lifestyle, means for identifying changes in product related requirements between consecutive life stages within each lifestyle and means for comparing product characteristics of a current product with the identified changes in product related requirements, in order to determine required changes in product characteristics for the current product or a projected future product.

According to a second aspect of the invention there is provided a method for managing a product strategy over a time period extending over one or more generations of consumers, said method comprising the steps of analyzing a first set of data relating to life stages of consumers for statistical division of said life stages into distinct groups within each generation of consumers; analyzing a second set of data relating to lifestyles within groups of life stages for different generations for dividing said lifestyles into distinct groups within each generation of consumers; analyzing a third set of data relating to current and future product characteristics required by consumers to determine requirements in different lifestyles within each life stage and each generation of consumers; utilizing data correlated from the first, second and third sets of data to determine required product characteristics for future products and assembling data relating to the required product characteristics into a product specification for the future product.

According to a third aspect of the invention there is provided a method for accomplishing a multi-generational product strategy, said method comprising the steps of analyzing data relating to consumer life stages for determining divisions between distinct groups therein; analyzing data relating to lifestyles within said distinct groups of consumer life stages for different generations for determining divisions within each generation of consumers; analyzing data relating to time-dependent product characteristics required by consumers to determine requirements of different lifestyles within each consumer life stage and each generation of consumers; utilizing results of the analysis to determine required product characteristics for future products and assembling information relating to the required product characteristics into a product specification for the future product.

The invention will now be described by way of example with reference to the accompanying drawing of which:-
Figure 1 schematically illustrates the processing system using a diagram in which a product has been plotted; and
Figure 2 schematically illustrates the processing system using a diagram in which several related products have been plotted.

According to the invention a data processing system comprises a computer processor or processing means for processing data and a storage device or means for storing data on a storage medium. A first means is arranged for processing data relating to life stages of consumers and the statistical division of said life stages into distinct groups within each generation of consumers.

Population statistics can be used for dividing various target groups into multiple life stages. For the current example, the seven life stages chosen are singles, couples without children, couples with one / two / three (or more) children, mature families (with grown-up children) and retired persons (a.k.a. empty nesters). Each life stage can be said to represent certain needs of a consumer. These needs may be given a higher priority than factors such as lifestyle, or wants, under certain circumstances. As a rule, each generation can be assumed to pass through at least two several of these stages during their lifetime. Such statistical information containing general information about age distribution and marital status is widely available from various commercial and government sources. Such population statistics can be processed and analyzed for a particular country, such as the United States of America, or for groups of countries, such as the European countries, depending on the type of product, target market and/or a target group of consumers.

For instance, pick-up trucks are currently very popular in USA, while sales in the rest of the world are marginal. At the same time small and medium sized vehicles, particularly with environmental features (hybrid, methanol or electrically powered), are more popular in Europe and a few American states, i.e. California. To enable the first means to process the above data, said first means further comprises means for inputting and storing on the storage medium statistical data for each generation life-stage within each generation, as well as means for inputting and storing on the storage medium data identifying groups of life stages within each generation throughout peoples lives.

A second means is arranged for processing data relating to lifestyles within groups of life stages for different generations and division of said lifestyles into distinct groups within each generation of consumers. Different lifestyles tend to vary between successive generations and are as a rule determined by personal values of the persons in question.

An individual's basic values in life are usually determined in his or her middle or late teens, when people comes of age. These values tend to remain constant over time, although the persons priorities may vary; for example, when he or she becomes a parent or when general circumstances in life changes.

The latter is the case when wants, or lifestyle, is superseded by needs, or life stage. For a manufacturer of automobiles, four main generation groups of particular interest (ages in brackets are only approximate) have been selected:-
1) "Generation Y" (age 16-25 years);
2) "Generation X" (age 25-35 years);
3) the "baby-boomers" (age 35- 54 years); and
4) the "mature generation" (aged 55+ years).

"Generation Y" can be termed the "digital" or information technology (IT) generation. . They include persons in their late teens about to acquire their basic values which will follow them and influence their choices during their lives. This is the generation age group to which the smaller and relatively inexpensive entry models are aimed.

The purpose of a new or second hand entry model is to make the buyer want to prefer a similar model or, at least, the same make when he/she upgrades to a new or newer model.

This generation will have had considerable experience with computers and will not be strangers to a car with a high IT-content and hi-tech features and solutions. Not having a family of their own or other priorities to consider, only economical limitations will influence their choice of car over their personal values.

"Generation X," includes singles or young couples with or without out children, some-times also termed "young urban professionals." More and more persons in this generation prefer to work and pursue a career to settling down and/or to start a family. This is of course reflected in their choice of car. With an improved personal economy and without a family, or possibly only a partner to take into consideration, the choice of car can often be made entirely in line with the person's personal values.

On the other hand, a young family with a new baby or a family with one or more young children will realize that space for a baby carriage and more luggage is required. Features such as vehicle safety and practical solutions become more important. In short, necessary priorities will more or less take precedence over personal values when choosing a new car. With an improved personal economy and without a family, or possibly only a partner, to take into consideration, the choice can often be made entirely in line with the person's personal values.

The "baby-boomers," include substantially all life stages, singles, established couples with/without children, and empty nesters coming out of the large post-war population growth of the 1950s and 1960s.

Persons in this generation will, as a rule, be reasonably well off and can afford to choose a car more in line with their personal values.

The "mature generation", born before the second world war is an agglomeration of several groups of generations.

For simplicity in this model, the GI's, Silent generation, and war babies are labelled as the "mature generation."

It is mainly made up of retired couples/singles or adults with grown children who have left home. The priorities of this generation may change with the realization that a smaller car is handier (e.g. easy to park), more practical (1-2 persons require less luggage space) and more economical. Some person may decide to stay with their choice of car because they have become used to a large car with ample space. Others may revert to choosing a new car more in line with their personal values, as their financial situation usually improves without children to support.

For each of these generations, five value clusters are selected. These value clusters are often unique for each generation. To illustrate this particular model, however, the assumption is made that the value sets or clusters are can be assumed to be very similar for generations 1) and 2) as well as for 3) and 4). In the case of generations 1) and 2), the following value clusters with associated product requirements have been selected:
Carpe Diem: This person lives for today and likes to grab opportunities as they occur. Functionality and versatility is of higher interest than price. Quality is only important insofar as that everything works and is reliable. Personal values are a function of diminished expectations and a shaky future. Counter to the Judea-Christian theology of delayed gratification and sacrifice, this person is on a quest for fun, passion and guilt-free experiences of the present moment. He/She wants to hear, touch, see, smell and taste the rush now.
Keywords: Thrill, Passion, Discovery, Independence, Fun Confidence, Adventure, Functional, Versatile, Reliable, Quality.
Torqueing: Persons in this category lead an active and sporting life. Prefers a powerful engine and/or a sporty design as well as functionality. Versatility is particularly important if he/ she is involved in multiple activities and/or sports. In their view, developments in technology should lead to new generations of products offering high torque and power. They prefer a synergistic approach with uncompromising mixing of performance as style and vice versa. Theirs is a more-is-more backlash against the early 90's less-is-more asceticism.
Keywords: Power, Thrill, Excellence, Maximum, Ultimate, Passion, Adventure, Energy.
Great Expectations: This person prefers something exclusive and has high quality and comfort requirements. The product should be almost maintenance free. He/She looks for hi-tech solutions involving electronics and a high IT content, such as a global positioning system (GPS), internet connection, a hands-free phone, in-vehicle entertainment systems with both CD and DVD capability, etc. There is an aspiration for symbols of success in the prosperous economy, centred around the American mythology of "the good life".

This aspiration is driven by an optimistic youth culture and the financially secure baby-boomers. Aspiration for symbols of success in the prosperous economy.
Keywords: Freedom, Success, Achievement, Fun, Exclusive, Quality, Comfort, Electronics, IT.
Neo-Puritanism: A puritan leads a simple lifestyle and is environmentally conscious. The design should preferably be spartan with few or no visible status attributes. He/She prefers good functionality to hi-tech solutions and will look carefully at fuel economy and environmental/recycling aspects. This person embraces the traditional values of family, home spirituality, work ethics, risk aversion and stable economy. A balance is sought between sacrifice and fulfilment.

The concept of neo-puritanism is perceived as a path towards stability, balance and well being.
Keywords: Prudence, Security, Responsibility, Conservatism, Practicality, Economy, Nostalgia, Faith, Simple, Spartan, Functional, Economical, Environment.
Artisan: Looks for colour, shape, design and fashion; interested in functionality and interesting constructional solutions, but this takes second place over design and current trends. The artisan searches for the original or authentic product or experience and gets a personal satisfaction in knowing that you have not settled for an imitation but have your hands on the real thing. Their belief is that the cultural worth of artisanship and craft are rising and that there is a renewed value for aesthetics. This is a back-lash against mass-production, which for the artisan is connected to low quality products and stereotype design.
Keywords: Aesthetics, Authenticity, Creativity, Personalization, Design, Colour, Functionality.

In the case of generations 3) and 4), the following sets of value clusters have been selected:
Merit Badgers: The Merit Badger collects experiences and thrills, enjoys new challenges and leads an active life. He/She enjoys showing off and must have the latest and/or fastest product with all extra features, mechanical and electronic. In this group there is a shift towards the 1990"s values to collect experiences, rather than the 1980"s race for consumption of products. Higher status is awarded for what you do, rather for what you own. "Bragging rights" are awarded to those with the most challenging and exotic badges of experience.
Keywords: Stimulation, Challenge, Adventure, Success, Pride, Fulfilment.
The Good Life: Persons in this group want to enjoy their just rewards for years of hard work and sacrifice, without apologizing for their "I've earned it"-attitude. They are fuelled by economic prosperity, a surging stock market and the largest inheritance in history. Their preference is more opportunity for lifestyle options and for setting their own rules.
Keywords: Consumerism, Bigger-is-better, Entertainment, Luxury, Hedonism, Comfort, Exclusive, Extras, Engine performance.
Legacy: Common for persons in this group is that they have reached a half-way point in their lives and are beginning to ask themselves questions. Realization among mid-lifers that they will not live forever raises the question - "How do I want to spend my remaining years?". Self-focused baby-boomers finally reaching the maturity to look beyond themselves to the coming generations will ask themselves - "What can I do to leave the world a better place?" The question - "How do I want to be remembered?" may lead to an active pursuit to leave an imprint to show that we were here. To this category of people, "traditional family values" becomes important.
Keywords: Closure, Generosity, Altruism, Reward, Design continuity, Reliability, Quality, Environment.
The New Family: Due to major social shifts a new paradigm of family emerges. Traditional markers of family units, such as race, age, sexual orientation, become more fluid. There is also a blurring of child and parent identities. The traditional "Gatekeeper" role held by the family father is up for grabs Persons in this category are likely to break with tradition and are willing to experiment and try new things.
Keywords: Love, Togetherness, Fun, Stress, Responsibility Modern design, Space, Versatility, Economy, Environment.
Higher Ground: Persons in this group are striving for self-realization, refinement and full realization of their personal identity. They have time for reflection on, and reevaluation of their lives. Many will take an interest in loftier pursuits rooted in personal and spiritual growth. There is also a commitment to keep mind, body, and spirit healthy, in order to feel good in all aspects of life.

Persons in this category looks for something else beyond mere personal transport. They prefer something exclusive and have high quality and comfort requirements.

Although engine performance is not on the top of the list, power should be available but discrete. As they tend to stay with a chosen make, design continuity is an important factor. Price or environmental concerns are not an issue.
Keywords: Learning, Discovery, Growth, Maturity, Wellness.

In this example five value clusters have been used, but this number can of course be adjusted to suit the particular product in question. The keywords used do not make up a complete set of data, but are listed as examples only.

To enable the third means to process the above generation and lifestyle related data, the second means further includes means for inputting and storing on the storage medium selected statistical data relating to values and preferences for each lifestyle within each generation, as well as means for inputting and storing on the storage medium selected data identifying groups of lifestyles within each generation.

A fourth means is arranged for processing data relating to current and future product characteristics required by consumers, determining the requirements made by consumers in different lifestyles within each life stage and each generation of consumers. The required product characteristics are compiled both by an analysis of the characteristics of a current product and by using predicted product requirement data. The former data can be obtained by a breakdown process involving the analysis of a current product and isolation of a number of features and keywords that are considered to give a sufficient characterization of the product.

The latter data may be obtained from surveys performed by various quality control institutes or companies, by conducting company or product specific customer surveys, or by conducting general or in-depth interviews.

An example of a quality control company is JD Powers which rank manufacturers and products based on evaluation of customer satisfaction surveys.

This process allows a number of features and keywords to be isolated in order to predict what future customers in the various age groups and with certain personal values are likely to require from a future product.

The age groups and values are of course identical to those generations and value clusters described above.

To enable the third means to process the above data, the third means further includes means for inputting and storing on the storage medium statistical data relating to product characteristics for the product to be evaluated.

It also includes means for inputting and storing on the storage medium data identifying present and future product related requirements for each life stage within each generation as well as data identifying present and future product related requirements for each lifestyle within each generation.

At this stage of the processing, product requirement data relating to possible changes in the priorities of persons having a particular lifestyle can be taken into account. For instance, persons in the "Merit Badgers" value cluster who move from the life stage "single" to "couple with one child" will not be able to pursue their lifestyle in full, due to a change in priorities. For a time, at least, they will have to put different requirements on a future product. In this case, priority requirements such as luggage space and safety will outweigh lifestyle requirements such as performance and hi-tech features.

A similar case can be made for each individual lifestyle and the product requirement data added into the processing. The latter data may be excluded, but are added if deemed to be required for obtaining a more accurate result.

This example only describes the evaluation of a single product. If so required, it is of course possible to process data for two or more related models or a group of products.

A fifth means is arranged for processing and correlating data from the first means relating to population statistics and generational belonging defined by certain age span according to, for instance, the US Census Bureau, the second means relating to lifestyles within groups of life stages for different generations, and the third means relating to generational belonging defined by certain age span according to, for instance, the US Census Bureau, the fourth means, related to current and future product characteristics in order to determine required product characteristics for future products or for changes in product characteristics in current products for each lifestyle, an life stage, and generation respectively.

This is done by comparing the characteristics of a product currently used by a target group having a particular lifestyle, with the product characteristics required by the same target group as it moves through different life stages and generation.

In this way appropriate changes in product characteristics and features can be predicted and implemented for future products in order to adapt it to the demands of the target group. The comparison can be made within a generation or between successive generations including similar target groups or lifestyles.

To enable the fifth means to process the above data, the fifth means further includes means for comparing product related requirements for each lifestyle with product related requirements for consecutive life stages within each lifestyle, as well as means for identifying changes in product related requirements between consecutive life stages within each lifestyle.

Finally, means is provided for comparing product characteristics and/or features of a current product with the previously identified changes in product related requirements in order for the fourth means to determine required changes in product characteristics and/or features for the current product or a projected future product aimed at one or more predetermined lifestyles.

A reliable optimization of future product characteristics for selected target groups can only be achieved by considering all factors together; that is, lifestyle, life stage, generation and product characteristics. In this way it is possible to predict the necessary changes of product requirements for a target group having a certain lifestyle as they move through different life stages.

The result is stored digitally using means for creating locations on the storage medium for storing and retrieving data relating to required product characteristics for current or future products. The final result may be used directly as a product specification listing the required features of a product to be manufactured. Depending on the population statistics fed into the processing system, the specification can be used to determine the future product strategy for the product on a particular market.

By performing this process on several products or models and determining a product specification for each product or model, an overall product strategy for each product or model and its relevant market(s) is obtained.

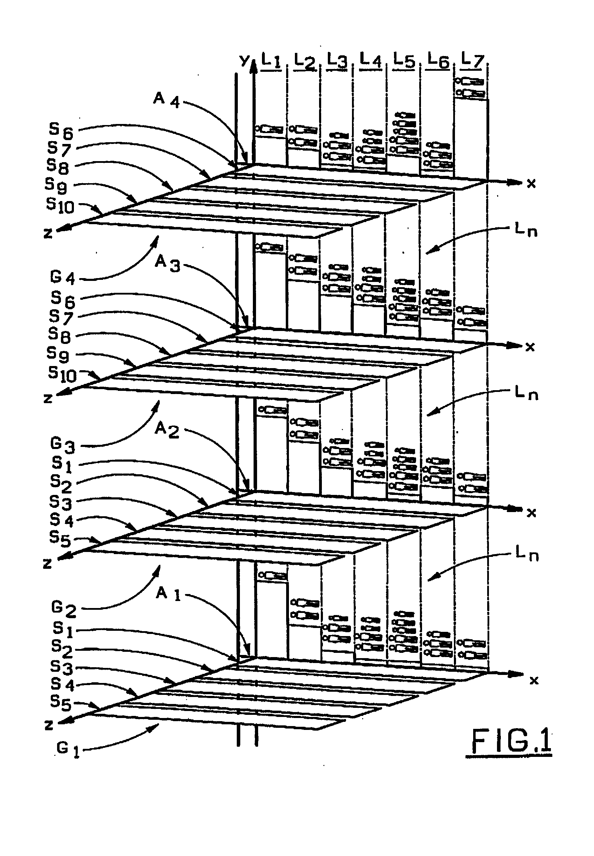

To facilitate the understanding of the process described above, Figure 1 shows a possible diagrammatic visualization of the result using a three-dimensional diagram having "x", "y" and "z" axes, each perpendicular to the others.

In the diagram, the horizontal x-axis represents the population distribution for the selected seven life stages; singles L1, couples without children L2, couples with one L-3 / two L4 / three (or more) L5 children, mature families L-6 (with grown-up children) and retired persons L7.

Each column along the x-axis represents the number of persons in each group, wherein the symbols used for each group is self-explanatory (described above).

Columns Ln representing said life stages are provided for each generation, but for simplicity these are not indicated by reference numerals for all generations.

The vertical y-axis represents age and indicates a number of platforms, each platform representing a generation. These are "Generation Y"G1, "Generation X"G2, "Baby-boomers"G3 and "Mature generation"G4. The scale of the y-axis is indicated along a vertical field representing age, to the right of said platforms.

For the current example, the position of each platform along the y-axis is indicated by A1, A2, A3 and A4, representing the ages of 16, 25, 35 and 50 years respectively. Finally, the horizontal z-axis represents five selected lifestyles for each generation. For the first two generations G1 and G2, the selected lifestyles are "Carpe Diem"S1, "Torqueing"S2, "Great Expectations"S3, "Neo-Puritanism"S4 and "Artisan"S5. For the following two generations, G3 and G4, the lifestyles are "Merit Badgers"S-6, "The Good Life"S7 "Legacy"S8, "The New Family"S9 and "Higher Ground"S10. Each lifestyle is allocated a section of the z-axis, whereby each individual section is represented by a horizontal field or column parallel to the x-axis for each generation Gx. It is of course possible to use a platform for each year on the x-axis, but that would make the diagram very complicated.

After inputting and processing all the necessary data, the results for each model or product can be plotted in the diagram as follows. For each age on the y-axis, each lifestyle is considered in turn. If the model has been found to include product requirements to fit the particular lifestyle, then a number of points P1-Pn are plotted along the lifestyle-column for those life stages that include the same product requirements. When all points have been plotted for each lifestyle in turn, the process is repeated for the next age. The example shown in Figure 1 uses age increments of one year, but other increments are of course possible.

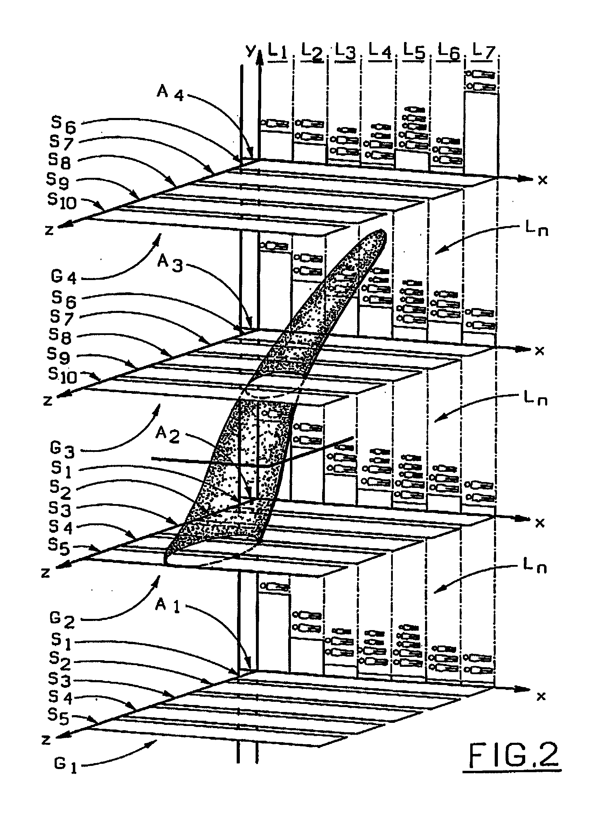

When all ages have been plotted for the particular model, the diagram will contain a large number of points Pn that can be enclosed by a three-dimensional volume having a shape representing the model. Obviously, the accuracy of this shape is determined by the size of age increments and the selected number of life stages and lifestyles. By repeating the process to include both current M0 and predicted future models M1, M2, M3, a diagram as shown in Figure 2 may be obtained. From this diagram it can be seen that a future model M1 might be based on the current model MC, as they have partially overlapping product requirements and target groups. Future models M2 and M3, however, would be new models, as both the product requirements and target groups are totally different. For M1-M3, the projected area of the model on the respective axes determines the product strategy for that particular model. When carrying out the process there is, however, no need for plotting the diagrams shown in Figures 1 and 2, as the result is obtained in the form of an actual product specification for the model in question.

## Claims

1. A data processing system for managing a product development strategy for a time period extending over one or more generations of consumers, **characterised in that** the system comprises of a computer processing means for processing data, a storage means for storing data on a storage medium, a first means for processing data relating to life stages of consumers and the statistical division of said life stages into distinct groups within each generation of consumers, a second means for processing data relating to lifestyles within groups of life stages for different generations and division of said lifestyles into distinct groups within each generation of consumers, a third means for processing data relating to generations within groups of life stages and groups of different lifestyles into distinct groups within each generation of consumers, a fourth means for processing data relating to current and future product characteristics required by consumers, determining product requirements made by consumers in different lifestyles within each life stage and each generation of consumers, a fifth means for processing and correlating data from the first, second third and fourth means in order to determine required product characteristics for future products or for changes in product characteristics in current products for each lifestyle and life stage respectively and means for creating locations on the storage medium for storing and retrieving data relating to required product characteristics for current or future products.

2. A system as claimed in claim 1 wherein the first means further comprises of a means for inputting and storing on the storage medium statistical data for each life stage within each generation and means for inputting and storing on the storage medium data identifying groups of life stages within each generation.

3. A system as claimed in claim 1 or in claim 2 wherein the second means further comprises of a means for inputting and storing on the storage medium statistical data relating to values and preferences for each lifestyle within each generation and means for inputting and storing on the storage medium data identifying groups of lifestyles within each generation.

4. A system as claimed in any of claims 1 to 3 wherein the third means further comprises of a means for inputting and storing on the storage medium statistical data relating to values and preferences for each generation within each life stage and lifestyle and means for inputting and storing on the storage medium data identifying generations within each life stage and lifestyle.

5. A system as claimed in any of claims 1 to 4 wherein the fourth means further comprises of a means for inputting and storing on the storage medium statistical data relating to product characteristics for a single product or a group of products to be evaluated, means for inputting and storing on the storage medium data identifying product related requirements for each life stage within each generation and means for inputting and storing on the storage medium data identifying product related requirements for each lifestyle within each generation.

6. A system as claimed in any of claims 1 to 5 wherein the fifth means further comprises of a means for comparing product-related requirements for each lifestyle with product related requirements for consecutive life stages within each lifestyle, means for identifying changes in product related requirements between consecutive life stages within each lifestyle and means for comparing product characteristics of a current product with the identified changes in product related requirements, in order to determine required changes in product characteristics for the current product or a projected future product.

7. A method for managing a product strategy over a time period extending over one or more generations of consumers, said method comprising the steps of analyzing a first set of data relating to life stages of consumers for statistical division of said life stages into distinct groups within each generation of consumers; analyzing a second set of data relating to lifestyles within groups of life stages for different generations for dividing said lifestyles into distinct groups within each generation of consumers; analyzing a third set of data relating to current and future product characteristics required by consumers to determine requirements in different lifestyles within each life stage and each generation of consumers; utilizing data correlated from the first, second and third sets of data to determine required product characteristics for future products and assembling data relating to the required product characteristics into a product specification for the future product.

8. A method for accomplishing a multi-generational product strategy, said method comprising the steps of analyzing data relating to consumer life stages for determining divisions between distinct groups therein; analyzing data relating to lifestyles within said distinct groups of consumer life stages for different generations for determining divisions within each generation of consumers; analyzing data relating to time-dependent product characteristics required by consumers to determine requirements of different lifestyles within each consumer life stage and each generation of consumers; utilizing results of the analysis to determine required product characteristics for future products and assembling information relating to the required product characteristics into a product specification for the future product.
